# EUROPEAN PATENT APPLICATION

(11) **EP 2 647 421 A2**
(43) Date of publication of application: **09.10.2013**
(21) Application number: 11846012.0
(22) Date of filing: 10.11.2011
(51) Int. Cl.: B01D 71/16, B01D 69/08, B01D 67/00

(54) **PREPARATION METHOD OF HOLLOW FIBER MEMBRANE FOR WATER TREATMENT USING CELLULOSE-BASED RESIN**

(30) Priority: 01.12.2010 KR 20100121169
(71) Applicant: LG Electronics Inc., Yeongdeungpo-gu Seoul 150-721 (KR)
(72) Inventor: LEE, Changho, SEOUL 150-721 (KR); KIM, Minjoung, SEOUL 150-721 (KR); OH, Hyunhwan, SEOUL 150-721 (KR); PARK, Jooyoung, SEOUL 150-721 (KR); LEE, Sumin, SEOUL 150-721 (KR)
(74) Representative: Katérle, Axel
(86) International application number: PCT/KR2011/008537
(87) International publication number: WO 2012/074222

(57) **Abstract**

The present disclosure relates to a preparation method of a hollow fiber membrane for water treatment that involves preparing a spinning composition including a cellulose-based resin, a poor solvent, a plasticizer, and an organic solvent and then spinning the spinning composition on a nonsolvent to form a hollow fiber membrane. Accordingly, the present disclosure overcomes the drawbacks of the conventional preparation method for hollow fiber membranes and thus provides a nano-filter (NF), reverse osmosis (RO) hollow fiber membrane for water treatment that easily enhances the properties of the separation membrane for water treatment and secures high reproducibility and high efficiency at low costs.

## Description

### TECHNICAL FIELD

The present invention relates to a preparation method of a hollow fiber membrane, and more particularly to a preparation method of a hollow fiber membrane for water treatment.

### BACKGROUND

In general, the hollow fiber membrane refers to a membrane in the form of a fiber having a thickness of about 2 mm with a hollow center and possesses the characteristic of selectively filtering out specific substances through its membrane wall. Such a hollow fiber membrane advantageously is advantageous over the other types of membranes in regards to high surface area of the membrane per volume and thus used in a wide range of applications, such as water purification, sewer/waste water treatment, hemodialysis, and all kinds of industrial uses.

The conventional preparation methods for hollow fiber membrane include the diffusion induced phase separation (DIPS) method using the phase inversion process based on the diffusion rates of the solvent and the non-solvent (Refer to Japanese Patent Laid-Open Publication Nos. H7-173323 and H1-22003), or the thermally induced phase separation (TIPS) method using heat exchange and phase separation techniques to heat the polymer up to a temperature above its melting temperature and prepare a membrane from the melted polymer (Refer to Japanese Patent No. 2899903). However, each preparation method has pros and cons as described below and thus disadvantageously cannot be used alone.

For example, the method of forming a membrane by the phase inversion process has pros that it is simple to control the pore size and the pore distribution on the membrane surface and easy to form the membrane, but cons that the membrane-forming solution is difficult to prepare by increasing the content of the polymer in a defined solvent, consequently with difficulty in acquiring higher breaking strength or higher tensile strength of the hollow fiber membrane. Further, the preparation method for hollow fiber membrane using the phase separation process is advantageous in that the membrane-forming solution can be prepared at high temperature, making it possible to dissolve the higher content of the polymer in the solvent and thus obtain a membrane with higher strength in comparison with the case of the phase inversion process. The preparation method using the phase separation process also confronts some problems in regards to low permeate flow and difficulty of controlling the pore size and pore distribution on the surface of the membrane. Another disadvantage of the phase separation process is the complicated preparation process and poor reproducibility.

Conventionally, in order to change the properties of the membrane surface, there has been used a double nozzle in forming a hollow fiber membrane, or a coating technique to apply a polymer having different properties on a separation membrane. The requisite for using a double nozzle is, however, the existence of coherence between the polymer to serve as a support and the polymer to be coated on the supporting polymer. If there exists neither interaction nor physical or chemical coherence between the two polymers, the two polymers are ready to get apart from each other. This leads to deadly results for the separation membrane, making the hollow fiber membrane useless as a separation membrane. Such a preparation method using a double nozzle results in difficulty of controlling the thickness of the membrane and takes too much time. For the technique of coating two polymers with different properties, it is necessary to provide an adequate strength for the support and secure a sufficiently high permeate flow. More disadvantageously, such a preparation method involves an extremely complicated and time-consuming process, because it is required to perform multi-step procedures to prepare a separation membrane.

Further, an after-treatment process may be adopted in order to change the properties of the separation membrane prepared or store the separation membrane. In the after-treatment process, the separation membrane is subjected to heat treatment or hot water treatment at a predetermined temperature for a predetermined period of time and then stored using a wetting agent or a stock solution. This process is necessarily carried out until a separation membrane module is completed. However, the process requires too much time to complete and is considered practicable only with the provision of many facilities.

### SUMMARY

It is therefore an object of the present invention to provide a preparation method of a hollow fiber membrane for water treatment using a cellulose-based resin in order to overcome or improve at least one of the problems with the prior art and solve the problems by way of a novel method.

In accordance with an embodiment of the present description, there is provided a preparation method of a hollow fiber membrane for water treatment using a cellulose-based resin that includes: preparing a spinning composition comprising a cellulose-based resin, a poor solvent, a plasticizer, and an organic solvent; and spinning the spinning composition to a non-solvent to form a hollow fiber membrane.

In this regard, the cellulose-based resin may include at least one selected from the group consisting of cellulose acetate, cellulose triacetate, and cellulose butylate.

The poor solvent is preferably ethylene glycol monohexyl ether, and the plasticizer is ethylene glycol. The organic solvent is n-methyl-2-pyrrolidone (NMP), and the non-solvent is more preferably water.

Preferably, the spinning composition includes 30 to 40 wt.% of the cellulose-based resin, 5 to 15 wt.% of the poor solvent, 5 to 15 wt.% of the plasticizer, and a remaining content of the organic solvent.

The spinning composition may include 40 to 50 wt.% of the organic solvent.

The present invention may further include performing a hot water treatment on the hollow fiber membrane.

The present invention may further include immersing the hollow fiber membrane in a base or acid solution to perform a surface modification.

In this regard, the base or acid solution preferably has a concentration in the range of 1,000 to 8,000 ppm.

The present invention may further include immersing the surface-modified hollow fiber membrane in a glycerin or polyvinyl alcohol (PVA) solution.

The present invention may further include immersing the surface-modified hollow fiber membrane in a mixed solution comprising at least one selected from the group consisting of glycerin, polyvinyl alcohol (PVA), polymethylmethacrylate (PMMA), polyacrylonitrile (PAN), polyethylene oxide (PEO), polyvinylacetate (PVAc), and polyacrylic acid (PAA).

In accordance with another embodiment of the present invention, there is provided a hollow fiber membrane for water treatment that includes a hollow fiber based on a cellulose-based resin.

The other specific contents of the embodiments are included in the following detailed description and drawings.

The hollow fiber membrane of the present invention is characterized by its substantial resistance to chlorine caused by the use of a cellulose-based resin having resistance to chlorine, which cannot be achieved with the conventional membranes commercially available, such as polyvinylidene fluoride, polysulfone, or polyamide membranes. In addition, the hollow fiber membrane has a sturdy support layer to exhibit good tensile strength. Further, the hollow fiber membrane is susceptible to hydrophilic or hydrophobic treatments by way of the surface modification and controllable in terms of pore size by the after-treatment.

Accordingly, the present invention overcomes the drawbacks of the conventional preparation method for hollow fiber membranes and thus provides a nano-filter (NF), reverse osmosis (RO) hollow fiber membrane for water treatment that easily enhances the properties of the separation membrane for water treatment and secures high reproducibility and high efficiency at low costs.

The cellulose-based NF, RO hollow fiber membrane having resistance to chloride as prepared by the present invention has such a high strength as to be easily practicable even under severe conditions of the environment and secures a high salt removal rate in spite of its high permeate flow, so it can used in a wide range of applications. Further, the easiness of controlling the pore size and distribution makes it possible to prepare the hollow fiber membrane for water treatment practicable more conveniently. Moreover, the preparation of the hollow fiber membrane is practicable without any special equipment to reduce the production cost and ensure the uniform membrane performance, consequently providing a membrane with guaranteed stability of the processing performance.

### BRIEF DESCRIPTION OF THE DRAWINGS

FIG. 1 is a flow chart explaining the preparation method of a hollow fiber membrane for water treatment using a cellulose-based resin in accordance with one embodiment of the present invention.
FIG. 2 is an SEM image showing the cross-section of a hollow fiber membrane prepared in one embodiment of the present invention.
FIG. 3 is an SEM image showing the surface of the hollow fiber membrane prepared in one embodiment of the present invention.

### DETAILED DESCRIPTION OF THE EMBODIEMENTS

While example embodiments of the present invention are susceptible to various modifications and alternative forms, specific embodiments thereof will be described in detail. It should be understood, however, that there is no intent to limit example embodiments of the invention to the particular forms disclosed, but conversely, example embodiments of the invention are to cover all modifications, equivalents, and alternatives falling within the spirit and scope of the invention. In explanation of the present invention, detailed description of the related art may be omitted when it is considered to unnecessarily obscure the point of the present invention.

The terminology used herein is for the purpose of describing particular embodiments only and is not intended to be limiting of example embodiments of the invention. As used herein, the singular forms "a", "an" and "the" are intended to include the plural forms as well, unless the context clearly indicates otherwise. It should be further understood that the terms "comprises", "comprising,", "includes", "including", and/or "have/has/having", when used herein, specify the presence of stated features, integers, steps, operations, elements, and/or components, but do not preclude the presence or addition of one or more other features, integers, steps, operations, elements, components, and/or groups thereof.

While terms including ordinal numbers such as "first" and "second" may be used to describe various components, such components are not limited to the terms. The terms are used only for the purpose of distinguishing one component from other components.

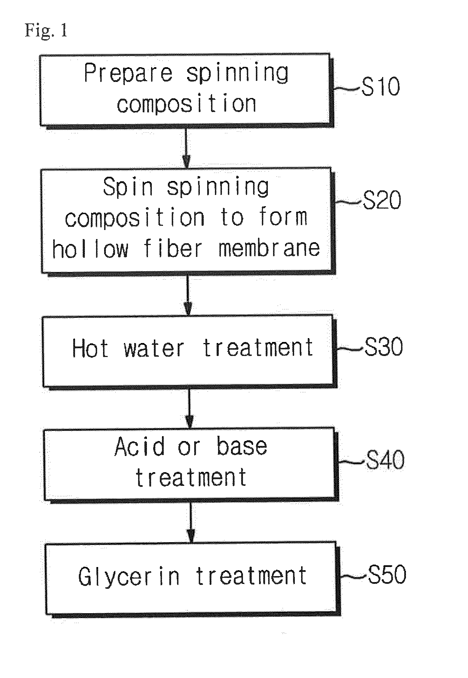

FIG. 1 is a flow chart explaining the preparation method of a hollow fiber membrane according to one embodiment of the present invention. Hereinafter, a description will be given as to the preparation method of a hollow fiber membrane according to one embodiment of the present invention with reference to FIG. 1.

The present invention is characterized by preparing a membrane in the form of a hollow fiber using a cellulose-based resin having a high resistance to chlorine and, for this purpose, preparing a spinning composition containing a poor solvent, a plasticizer, and an organic solvent in a cellulose-based resin.

Firstly, the present invention includes preparing a spinning composition containing a cellulose-based resin, a poor solvent, a plasticizer, and an organic solvent (in S10).

According to one embodiment, the cellulose-based resin basically has a high resistance to chlorine. The particularly preferred cellulose-based resin exhibits a high resistance to chlorine. For example, the cellulose-based resin may be a cellulose ester-based material. More specifically, the cellulose-based resin may include at least one selected from cellulose acetate, cellulose triacetate, or cellulose butyrate. The conventional reverse osmosis membrane consisting of a polyamide-based resin is necessarily prepared by interfacial polymerization on a support and thus difficult to make in the form of a hollow fiber. To overcome this problem, the present invention uses a cellulose-based resin having a chlorine resistance characteristic and adds a poor solvent, a plasticizer, and an organic solvent to the cellulose-based resin to prepare a spinning composition and thereby form a membrane in the shape of a hollow fiber using a cellulose-based material. The cellulose-based separation membrane (i.e., reverse osmosis membrane) disadvantageously has a lower permeate flow per unit area than the polyamide-based reverse osmosis membrane, but it can have a great increase in the cross-sectional area when prepared in the form of a hollow fiber rather than a flat membrane, thereby securing a sufficiently high level of flow.

The poor solvent does not dissolve the polymer but serves to enhance the properties of the hollow fiber membrane and maintain the optimal viscosity of the polymer during the molding process in forming the hollow fiber membrane, making the polymer easily molded into a hollow fiber form. For example, the poor solvent may include alkyl ketones, esters, glycol esters, or organic carbonates with a medium chain length, such as cyclohexanone, isophorone, γ-butyrolactone, methyl isoamyl ketone, dimethyl phthalate, propylene glycol methyl ether, propylene carbonate, diacetone alcohol, or glycerol triacetate, which can be used alone or as a mixture. According to one embodiment, the poor solvent is preferably ethers, more preferably ethylene glycol monohexyl ether, that is, n-hexyl carbitol.

The plasticizer is to solve the problem with the spinning composition that the higher polymer content leads to an increase in the inter-polymer viscosity and hence agglomeration of the polymer, which makes it difficult to form the polymer into a hollow fiber. The plasticizer is also added to prevent coagulation of the spinning composition, since the spinning composition is sensitive to air or a trace of water and susceptible to phase separation. For example, the plasticizer may include ethylene glycol (EG), polyethylene glycol (PEG), dioctyl phthalate (DOP), dioctyl adipate (DOA), tricresyl phosphate (TCP), polyvinyl pyrrolidone (PVP), and so forth, which can be used alone or as a mixture. According to one embodiment, the plasticizer is preferably glycols that are beneficial to ensure more stability in the viscosity and formability of the polymer solution.

The organic solvent has a function of dissolving the cellulose-based resin. For example, the organic solvent may include n-methyl-2-pyrrolidone (NMP), dimethylformamide (DMF), dimethylacetamide (DMAc), dimethyl sulfoxide (DMSO), and so forth. According to one embodiment, the organic solvent is preferably n-methyl-2-pyrrolidone.

In accordance with one embodiment of the present invention, the spinning composition preferably includes about 30 to 40 wt.% of the cellulose-based resin, about 5 to 15 wt.% of the poor solvent, about 5 to 15 wt.% of the plasticizer, and a remaining content of the organic solvent. More preferably, the spinning composition includes 40 to 50 wt.% of the organic solvent. As can be seen in the after-mentioned Examples, the hollow fiber membrane has excellences in permeate flow, salt removal rate, and tensile strength when the spinning composition includes the respective components within the above-defined content range.

To prepare the spinning composition, a mixture is made from the cellulose resin, the organic solvent, the poor solvent, and the plasticizer and then agitated for a predetermined period of time in a reactor filled with an inert gas such as nitrogen gas. The agitation process may be carried out at a high temperature in the range of, for example, 80 to 200 °C. Subsequently, the spinning composition is transferred into a stabilization tank under the same conditions of temperature and atmosphere and stored for a predetermined period of time for stabilization.

The spinning solution thus obtained may have a viscosity of 100 to 50,000 cps at 25 °C. Before the use, the spinning solution is controlled in viscosity in order to have an adequate membrane characteristic according to the type of treatment using it.

Secondly, the spinning composition is spun on a nonsolvent (i.e., coagulating solution) to form a hollow fiber membrane (in S20).

The spinning process may employ the conventional spinning device. More specifically, the spinning composition is discharged from an outlet of the spinning solution nozzle into air to induce formation of a cavity in the center and fed into a coagulation bath containing a coagulating solution, so the spinning solution coagulates rapidly to complete a hollow fiber membrane having a cavity. In this manner, the polymer resin solution discharged from the spinneret undergoes solidification while passing through the air gap and the coagulating solution sequentially.

The air gap is chiefly an air layer or an inert gas layer, and its length can be in the range of 0.1 to 15 cm.

The nonsolvent for phase transition may include pure water, a mixture of pure water and a predetermined portion of a solvent, glycols, or alcohols. For example, the nonsolvent may include ethylene glycol, 1,2-propane diol, 1,3-propane diol, glycerol, amylalcohol, aniline, toluene, xylene, benzyl alcohol, water, 1,3-butane diol, 2,3-butane diol, 1,4-butane diol, cyclohexanol, 1,4-dioxane, ethyl alcohol, ethylene glycol diacetate, ethylene glycol diethyl ether, ethylene glycol dimethyl ether, ethylene glycol monobenzyl ether, ethylene glycol monobutyl ether, ethylene glycol monoethyl ether, ethylene glycol monomethyl ether, ethylene glycol monophenyl ether, ethylene glycol monohexyl ether, and lauryl alcohol, which can be used alone or as a mixture. According to one embodiment, the nonsolvent is preferably pure water that is generally found and inexpensive and contributes to reduction of environmental contaminations.

To eliminate the remaining solvent and nonsolvent, the hollow fiber membrane prepared by the above-described process is preferably subjected to hot water treatment in a water tank heated up to the boiling temperature of water or below until there is no smell of the solvent on the surface of the hollow fiber membrane (in S30). Typically, the hot water treatment tome is suitably 6 hours or longer.

Subsequent to the hot water treatment, the cellulose-based hollow fiber membrane is more preferably immersed in an acid or base solution having a predetermined concentration for the sake of surface modification (in S40).

The acid or base solution has a concentration preferably in the range of 1,000 to 8,000 ppm, more preferably 3,000 to 7,000 ppm, most preferably around 5,000 ppm. Out of the defined concentration range, the salt removal rate and the tensile strength tend to deteriorate as shown in the after-described Examples. For example, the acid or base solution can be a NaOH or HCl solution, and the hollow fiber membrane can be immersed in the solution for 0.5 to 24 hours.

Subsequently, the hollow fiber membrane may be treated with glycerin or polyvinyl alcohol (PVA) (in S50). More specifically, the glycerin treatment may use glycerin alone or in combination with another ingredient. In this regard, the compound to be mixed with glycerin may include propylene glycol, glycerin acetate, sugar alcohols (e.g., sorbitol, xylitol, maltitol, etc.), polydextrose, quillaia extract, lactic acid, urea, polyvinyl alcohol (PVA), polymethylmethacrylate (PMMA), polyacrylonitrile (PAN), polyethylene oxide (PEO), polyvinyl acetate (PVAc), polyacrylic acid (PAA), and so forth.

According to one embodiment, the mixed solution may be a mixed solution of glycerin (80 to 100 wt.%) and an aqueous solution of polyvinyl alcohol (PVA) (0 to 20 wt.%); or a mixed solution of glycerin (80 to 100 wt.%) and an aqueous solution of polymethylmethacrylate (PMMA) (0 to 20 wt.%). After immersed in the mixed solution at a temperature ranging from the room temperature to 100 °C for 0.1 to 24 hours, the hollow fiber membrane is more preferably dried out at a temperature ranging from the room temperature to 100 °C for 0.1 to 24 hours.

In another aspect of the present invention, there is provide a hollow fiber membrane for water treatment characterized by including a hollow fiber based on a cellulose resin. Conventionally, there has been a few commercialized example of the hollow fiber membrane for water treatment. Particularly, such a hollow fiber membrane using a cellulose-based resin as a base has never been suggested.

Preferably, such a hollow fiber membrane for water treatment is prepared by the above-described preparation method.

Preferably, the hollow fiber has a diameter in the range of 0.1 to 10 µm as can be seen from the after-mentioned Examples.

In the hollow fiber membrane for water treatment, a plurality of the hollow fibers can be densely packed into a cylindrical bundle having a cavity. More preferably, such a cylindrical bundle of the hollow fibers may have an outer diameter of 0.1 to 5.0 mm and an inner diameter of 0.08 to 4.8 mm.

Further, the present invention may be a hollow fiber membrane for water treatment that has a tensile strength of 10 N or greater, a pure water permeate flow of 1 L/m²hr (3 kgf/cm²) or greater, and a salt removal rate of 50 % or greater for MgSO₄.

According to the present invention, it is possible to provide a

According to the present invention, it is possible to overcome the problems with the conventional preparation method for hollow fiber membranes and thus provide a nano-filter (NF), reverse osmosis (RO) hollow fiber membrane for water treatment, which easily enhances the properties of the separation membrane for water treatment and secures high reproducibility and high efficiency at low costs.

### MODE FOR INVENTION

Hereinafter, reference will be made to specified Examples and Comparative Examples to describe the preparation method of a hollow fiber membrane for water treatment according to the present invention.

### Example 1

A mixture is made using 35 wt.% of a cellulose-based polymer, 45 wt.% of n-methyl-2-pyrrolidone (NMP) as an organic solvent, 10 wt.% of diethylene glycol monohexyl ether (hexyl carbitol, HC) as a poor solvent, and 10 wt.% of ethylene glycol as a plasticizer. After 12-hour agitation in a reactor filled with nitrogen gas at 180 °C, the mixture is transferred into a stabilization tank under the same conditions and stabilized for 12 hours to prepare a spinning composition. Subsequently, the spinning composition is discharged through a nozzle and formed into a hollow fiber, which is then immersed in a nonsolvent placed in an internal coagulation bath (i.e., phase transition tank) to complete a hollow fiber membrane. In this regard, the nonsolvent is pure water, the quantitative pumping rate of the internal coagulation bath is 4.5 ml/min, and the temperature is 25 °C. To transfer the spinning solution, the discharging pressure is determined to set the nitrogen pressure in the reactor as 5 kgf/cm² or higher, while the solution transfer pumping rate is set to 30 rpm, with the distance between the nozzle and the nonsolvent of the phase transition tank fixed at 10 cm.

### Example 2

The hollow fiber membrane prepared in Example 1 is immersed in a NaOH aqueous solution having a concentration of 5,000 ppm at the room temperature for 12 hours to acquire surface modification.

### Example 3

The hollow fiber membrane surface-modified in Example 2 is immersed in an aqueous solution containing 30 wt.% of glycerin for one hour and then dried out at the room temperature for 24 hours to complete a hollow fiber membrane.

### Example 4

The hollow fiber membrane surface-modified in Example 2 is immersed in an aqueous solution containing 0.5 wt.% of polyvinyl alcohol for one hour and then dried out at the room temperature for 24 hours to complete a hollow fiber membrane.

### Example 5

The hollow fiber membrane surface-modified in Example 2 is immersed in a 1:1 mixed solution of an aqueous solution containing 30 wt.% of glycerin and 0.5 wt.% of polyvinyl alcohol for one hour and then dried out at the room temperature for 24 hours to complete a hollow fiber membrane.

### Example 6

The hollow fiber membrane prepared in Example 1 is immersed in a NaOH aqueous solution having a concentration of 10,000 ppm at the room temperature for 12 hours to acquire surface modification.

### Example 7

The hollow fiber membrane surface-modified in Example 2 is immersed in a solution containing 100 wt.% of glycerin for one hour and then dried out at the room temperature for 24 hours to complete a hollow fiber membrane.

### Example 8

The hollow fiber membrane surface-modified in Example 2 is immersed in an aqueous solution containing 20 wt.% of polyvinyl alcohol for one hour and then dried out at the room temperature for 24 hours to complete a hollow fiber membrane.

### Comparative Example 1

The procedures are performed in the same manner as described in Example 1, excepting that a hollow fiber membrane is prepared using a spinning composition containing 35 wt.% of a cellulose-based polymer and 65 wt.% of n-methyl-2-pyrrolidone (NMP).

### Comparative Example 2

The procedures are performed in the same manner as described in Example 1, excepting that a hollow fiber membrane is prepared using a spinning composition containing 35 wt.% of a cellulose-based polymer, 55 wt.% of n-methyl-2-pyrrolidone (NMP), and 10 wt.% of diethylene glycol monohexyl ether (hexyl carbitol, HC).

### Comparative Example 3

The procedures are performed in the same manner as described in Example 1, excepting that a hollow fiber membrane is prepared using a spinning composition containing 35 wt.% of a cellulose-based polymer, 55 wt.% of n-methyl-2-pyrrolidone (NMP), and 10 wt.% of glycol.

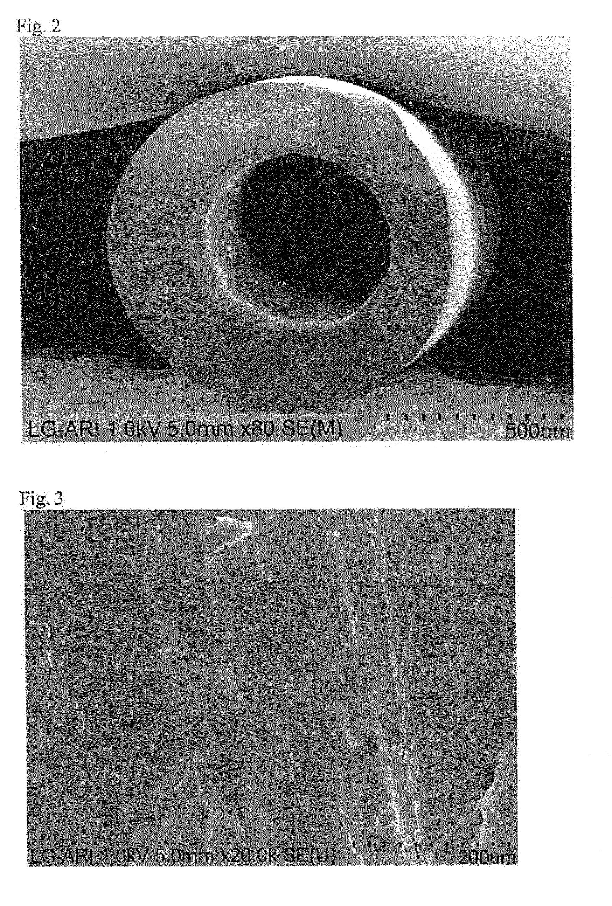

FIG. 2 is a scanning electron microscope (SEM, Hitachi S-2140) image showing the cross-section of the hollow fiber membrane prepared by one embodiment (Example 1) of the present invention, and FIG. 2 is an SEM image showing the surface of the hollow fiber membrane prepared by the one embodiment (Example 1) of the present invention.

As can be seen from the illustrations, the hollow fiber membrane for water treatment according to the present invention as prepared by the above-described preparation method includes a hollow fiber consisting of a cellulose-based resin. The hollow fiber has a diameter in the range of 0.1 to 10 µm. As shown in FIG. 2, a plurality of the hollow fibers are densely packed into a cylindrical bundle having a cavity. Such a cylindrical bundle has an outer diameter of 0.1 to 5.0 mm and an inner diameter of 0.08 to 4.8 mm. In other words, a plurality of hollow fibers are densely packed to constitute a cylindrical bundle as illustrated in FIG. 2, thereby completing the hollow fiber membrane for water treatment according to the present invention. Accordingly, the cross-section of the hollow fiber membrane for water treatment according to the present invention includes a cylindrical bundle having a cavity as shown in FIG. 2 and takes the shape called "sponge" structure.

In addition, the hollow fiber membranes obtained in the Examples 1 to 8 and the Comparative Examples 1, 2 and 3 are measured in regards to tensile strength by using a micro-forcing tester. For determination of the water permeate flow (3 kgf/cm², 1 L/min pure water) and salt removal rate (MgSO₄, 250 ppm), a pressurized module of the hollow fiber membrane with a predetermined length and a predetermined number of strands is prepared and tested. The measured properties are presented in the following Table 1.

**[Table 1]**

| Composition (cellulose/NMP/HC/glycol) | Water permeate flow (L/m²hr (3 kgf/cm²)) | Salt removal rate (%) | Tensile strength (N) |
|---|---|---|---|
| Example 1 (35/45/10/10) | 9.23 | 50 | 60 |
| Example 2 (35/45/10/10) + NaOH 5,000 ppm | 12.69 | 32 | 40 |
| Example 3 (35/45/10/10) + NaOH 5,000 ppm -> aqueous solution of 30 wt.% glycerin | 7.53 | 73 | 75 |
| Example 4 (35/45/10/10) + NaOH 5,000 ppm -> aqueous solution of 0.5 wt.% PVA | 4.55 | 81 | 70 |
| Example 5 (35/45/10/10) + NaOH 5,000 ppm -> 30 wt.% glycerin + 0.5 wt.% PVA | 6.14 | 90 | 75 |
| Example 6 (35/45/10/10) + NaOH 10,000 ppm | 17.10 | 0 | 10 |
| Example 7 (35/45/10/10) + NaOH 5,000 ppm -> 100 wt.% glycerin | 8.27 | 52 | 75 |
| Example 8 (35/45/10/10) + NaOH 5,000 ppm -> aqueous solution of 20 wt.% PVA | 1.48 | 95 | 75 |
| Comparative Example 1 (35/65) | 1.09 | 10 | 25 |
| Comparative Example 2 (35/55/10 (HC)) | 3.27 | 35 | 65 |
| Comparative Example 3 (35/55/10 (glycol)) | 4.43 | 5 | 35 |

Referring to Table 1, the hollow fiber membrane prepared by the present invention has a tensile strength of 10 N or greater, a pure water permeate flow of 1 L/m²hr (3 kgf/cm²) or greater, and a salt removal rate of 50 % or greater for MgSO₄.

Further, the hollow fiber membranes prepared in the Examples of the present invention are mostly superior to the hollow fiber membranes prepared in the Comparative Examples in regards to water permeate flow, salt removal rate, and tensile strength. However, the treatment with a high-concentration base (NaOH) solution leads to deterioration in the salt removal rate and the tensile strength.

The above description of the present invention is provided in detail for the purpose of illustration of the embodiments disclosed herein. Nevertheless, various changes and modifications may be made without changing technical conception of the present but not intended to limit the scope of the present invention.

## Claims

1. A preparation method of a hollow fiber membrane for water treatment using a cellulose-based resin, comprising:
preparing a spinning composition comprising a cellulose-based resin, a poor solvent, a plasticizer, and an organic solvent; and
spinning the spinning composition to a non-solvent to form a hollow fiber membrane.

2. The preparation method as claimed in claim 1, wherein the cellulose-based resin comprises at least one selected from the group consisting of cellulose acetate, cellulose triacetate, and cellulose butylate.

3. The preparation method as claimed in claim 1, wherein the poor solvent is ethylene glycol monohexyl ether.

4. The preparation method as claimed in claim 1, wherein the plasticizer is ethylene glycol.

5. The preparation method as claimed in claim 1, wherein the organic solvent is n-methyl-2-pyrrolidone (NMP).

6. The preparation method as claimed in claim 1, wherein the non-solvent is water.

7. The preparation method as claimed in claim 1, wherein the spinning composition comprises 30 to 40 wt.% of the cellulose-based resin, 5 to 15 wt.% of the poor solvent, 5 to 15 wt.% of the plasticizer, and a remaining content of the organic solvent.

8. The preparation method as claimed in claim 7, wherein the spinning composition comprises 40 to 50 wt.% of the organic solvent.

9. The preparation method as claimed in claim 1, further comprising:
performing a hot water treatment on the hollow fiber membrane.

10. The preparation method as claimed in claim 1, further comprising:
immersing the hollow fiber membrane in a base or acid solution to perform a surface modification.

11. The preparation method as claimed in claim 10, wherein the base or acid solution has a concentration in the range of 1,000 to 8,000 ppm.

12. The preparation method as claimed in claim 10, further comprising:
immersing the surface-modified hollow fiber membrane in a glycerin or polyvinyl alcohol (PVA) solution.

13. The preparation method as claimed in claim 10, further comprising:
immersing the surface-modified hollow fiber membrane in a mixed solution comprising at least one selected from the group consisting of glycerin, polyvinyl alcohol (PVA), polymethylmethacrylate (PMMA), polyacrylonitrile (PAN), polyethylene oxide (PEO), polyvinylacetate (PVAc), and polyacrylic acid (PAA).

14. A hollow fiber membrane for water treatment, comprising a hollow fiber based on a cellulose-based resin.

15. The hollow fiber membrane as claimed in claim 14, wherein the hollow fiber has a diameter in the range of 0.1 to 10 µm.

16. The hollow fiber membrane as claimed in claim 14, wherein a plurality of the hollow fibers are densely packed to form a cylindrical bundle having a cavity.

17. The hollow fiber membrane as claimed in claim 16, wherein the cylindrical bundle has an outer diameter of 0.1 to 5.0 mm and an inner diameter of 0.08 to 4.8 mm.

18. The hollow fiber membrane as claimed in claim 14, wherein the hollow fiber membrane has a tensile strength of 10 N or greater, a pure water permeate flow of 1 L/m²hr (3 kgf/cm²) or greater, and a salt removal rate of 50 % or greater for MgSO₄.
